# EUROPÄISCHE PATENTSCHRIFT

(11) **EP 3 791 101 B1**
(45) Veröffentlichungstag und Bekanntmachung des Hinweises auf die Patenterteilung: **19.01.2022**
(21) Anmeldenummer: 19721241.8
(22) Anmeldetag: 25.04.2019
(51) Int. Cl.: F16L 11/112, F02M 35/10, F16L 11/115

(54) **LUFTLEITUNG FÜR KRAFTFAHRZEUGE**
AIR PIPE FOR MOTOR VEHICLES
CONDUITE D'AIR POUR VÉHICULES À MOTEUR

(30) Priorität: 09.05.2018 DE 102018111191
(43) Veröffentlichungstag der Anmeldung: 17.03.2021
(73) Patentinhaber: Montaplast GmbH, 51590 Morsbach (DE)
(72) Erfinder: TIMME, Ralf, 71116 Gärtringen (DE); SARANGLA, Muralikrishna, 89075 Ulm (DE); BENZ, Alexander, 70839 Gerlingen (DE); BENZ, Viktor, 71067 Sindelfingen (DE); STOPPERT, Holger, 71067 Sindelfingen (DE)
(74) Vertreter: Lippert Stachow Patentanwälte Rechtsanwälte
(86) Internationale Anmeldenummer: PCT/EP2019/060617
(87) Internationale Veröffentlichungsnummer: WO 2019/214959

(56) Entgegenhaltungen:
- DE-A1-102004 038 087
- DE-A1-102004 053 985
- JP-A- S6 045 772

## Beschreibung

Die Erfindung ist in den begleitenden Ansprüchen definiert. Die Erfindung betrifft eine Luftleitung für Kraftfahrzeuge, insbesondere zur Verbindung eines Heißbauteils mit einem Kaltbauteil, wobei an einem ersten Ende der Leitung erste Verbindungsmittel zur luftdichten Festlegung der Luftleitung an einem Heißbauteil und an dem zweiten Ende der Leitung zweite Verbindungsmittel zur luftdichten Festlegung der Leitung an einem Kaltbauteil vorgesehen sind, wobei zumindest ein flexibler Leitungsabschnitt zwischen dem ersten und dem zweiten Verbindungsmittel vorgesehen ist, und wobei die Leitung einen freien Leitungsquerschnitt aufweist. Zudem weist die Leitung Stützringe aus einem gegenüber dem flexiblen Leitungsmaterial formstabilen Material auf, welche den freien Leitungsquerschnitt umgeben und den flexiblen Leitungsabschnitt in seiner Querschnittsform stabilisieren.

Gattungsgemäße Luftleitungen für Kraftfahrzeuge, wie diese z.B. bekannt sind aus DE 10 2004 053 985 A1, DE 10 2004 037 088 B3, DE 10 2004 038 087 A1 oder DE 10 2007 009 906 A1, werden beispielsweise eingesetzt, um einen Turbolader, einen Teil einer Verbrennungskraftmaschine oder eine andere Kraftfahrzeugeinrichtung mit erhöhter Betriebstemperatur mit einem Kaltbauteil wie beispielsweise einem Luftfilter oder einer sonstigen Luftansaugeinrichtung zu verbinden. Zwischen dem Heißbauteil und dem Kaltbauteil kann somit bei Betriebstemperatur des Kraftfahrzeuges ohne weiteres ein Temperaturunterschied von ≥ 100°C vorliegen. Die Luftleitung muss hierbei zugleich einen Toleranz- und/oder Schwingungsausgleich zwischen den Anschlussbauteilen bereitstellen.

Dies bezieht sich einerseits auf Toleranzen aufgrund sich ändernder Betriebstemperaturen des Heißbauteils, was auch den Verbindungsbereich des Heißbauteils mit der Luftleitung tangiert. Andererseits ist eine Luftleitung mechanischen Wechselbeanspruchungen wie Schwingungen, Vibrationen, Zug- und/oder Schubkräften ausgesetzt, welche auch aufgrund des Betriebes des Fahrzeuges auftreten können. Eine Luftleitung muss somit über lange Zeiträume hohe thermische und/oder mechanische Belastungen standhalten.

Ferner muss eine Luftleitung kostengünstig herstellbar sein, insbesondere bei der Herstellung von Kraftfahrzeugen in Großserie, und einfach montierbar und demontierbar.

Bisher bekannte Luftleitungen werden oftmals als Blasformteile hergestellt, welche über separate Metallschellen mit den luftzufuhr- und luftabfuhrseitigen Bauteilen wie Turbolader und Luftfiltergehäuse zu verbinden sind. Die Herstellung und Handhabung dieser separaten Verbindungsmittel ist jedoch aufwändig. Ferner weisen durch im Blasformverfahren hergestellte Leitungen verfahrensbedingt in der Regel ungleichmäßige Wandstärken auf, insbesondere wenn die Leitung einen flexiblen Abschnitt in Art eines Faltenbalges mit wellenförmigen Erhebungen und Vertiefungen aufweist. Diese ungleichmäßigen Wandstärken beziehen sich einerseits auf die verschiedenen Umlenkungen des Faltenbalgbereichs aber auch auf die Wandstärken von gekrümmten Leitungsbereichen, beispielsweise wenn die Luftleitung in Art eines Luftansaugkrümmers, ausgebildet ist. Die Wandstärke der Luftleitung in diesen Krümmungsbereichen ist jedoch im Blasformverfahren nur schwer kontrollierbar.

Andererseits müssen derartige Luftleitungen oftmals hohen Unterdrucken im Leitungsinneren standhalten, insbesondere bei Verwendung als Luftansaugleitung für Turbolader oder dergleichen, wobei sich die Querschnittsgeometrie der Leitung nur in begrenzten Toleranzen ändern sollte, um definierte Luftansaugströmungsverhältnisse zu gewährleisten. Weiterhin sind an die Zuverlässigkeit der Luftleitung über eine möglichst lange Betriebsdauer hohe Anforderungen zu stellen, da beispielsweise eine Beschädigung der Leitung aufgrund von Materialermüdung zu einem Ausfall oder Leistungsabfall der mit der Reinluft versorgten Einrichtung wie einem Turbolader führen kann.

Der Erfindung liegt die Aufgabe zu Grunde, eine Luftleitung für Kraftfahrzeuge bereitzustellen, welche kostengünstig herstellbar ist, eine hohe Betriebszuverlässigkeit und Lebensdauer aufweist und auch bei hohem Leitungsunterdruck formstabil ist.

Diese Aufgabe wird durch eine Luftleitung nach Anspruch 1 gelöst. Vorteilhafte Ausführungsformen ergeben sich aus den Unteransprüchen.

Erfindungsgemäß weist die Leitung eine Krümmung auf und die Stützringe weisen im Bereich einer Innenkrümmung eine geringere Breite in Längsrichtung der Leitung auf als im Bereich einer Außenkrümmung der Leitung. Durch die Stützringe wird somit das flexible Leitungsmaterial, welche die Wandung des flexiblen Leitungsabschnittes ausbildet besonders stabilisiert. Die Stützringe sind hierbei in Längsrichtung der Luftleitung beabstandet voneinander angeordnet, so dass zwischen den Stützringen das flexible Leitungsmaterial Bewegungen zwischen Heißbauteil und Kaltbauteil ausgleichen kann. Aufgrund der hohen Formstabilität der Stützringe wird die Leitung jedoch wesentlich stabilisiert und kann wesentlich höhere Unterdrucke standhalten, ohne zu kollabieren. Hierdurch weist die Leitung einerseits eine große Flexibilität andererseits eine hohe Steifigkeit, insbesondere gegenüber Unterdruck (Kollaps-Steifigkeit), auf. Durch die Anordnung der Stützringe kann die mechanische Stabilität der Luftleitung besonders einfach und effektiv an die jeweiligen Erfordernisse angepasst werden, beispielsweise durch Anpassung der Anzahl von Stützringen je Einheitslänge der Luftleitung und/oder der Breite der Stützringe, welche damit auch die Breite der zwischen benachbarten Stützringen angeordneten Leitungsabschnitt aus flexiblem Leitungsmaterial definieren. Das flexible Leitungsmaterial bildet vorzugsweise über die gesamte Erstreckung des flexiblen Leitungsabschnittes, auch in Umfangsrichtung, eine durchgehende Wandung in Art eines Schlauches aus.

Die erfindungsgemäße Luftleitung ist besonders bevorzugt als Luftleitung zum Einsatz im Motorbereich ausgebildet, welche eine Einrichtung des Motors oder Antriebseinrichtung wie insbesondere einen Turbolader mit Luft versorgt oder diese von der Einrichtung abführt. Die Leitung kann insbesondere als Reinluftleitung zur Zufuhr von Reinluft zur Einrichtung, als Ladeluftleitung, insbesondere auch bei hohen Ladedrucken, oder Rohluftleitung ausgebildet sein, insbesondere zum Luftmanagement eines Turboladers. Gegebenenfalls kann die erfindungsgemäße Leitung auch zur Luftversorgung oder Luftabfuhr einer anderen Einrichtung eines Kraftfahrzeuges wie Ladeluftkühler, Wärmetauscher oder dergleichen eingesetzt werden.

Die Stützringe sind vorzugsweise radial innenseitig an der Wandung des flexiblen Leitungsabschnittes angeordnet, die Stützringe können radial außenseitig von dem flexiblen Leitungsmaterial umgeben sein, vorzugsweise über deren gesamte Erstreckung in Leitungslängsrichtung und deren gesamten Umfang. Die Stützringe können auch von dem flexiblen Leitungsmaterial in Bezug auf die Wandstärke des Stützringes ummantelt, also radial innenseitig und außenseitig von dem Leitungsmaterial umschlossen sein, so dass eine besonders gute Fixierung der Stützringe durch das flexible Leitungsmaterial gegeben ist. Die Stützringe können jedoch auch an ihrer radialen Innenseite nur teilweise oder nicht von dem flexiblen Leitungsmaterial umschlossen sein, wodurch die Herstellung der Leitung mit den Stützringen wesentlich erleichtert ist. Ferner hat es sich herausgestellt, dass hierdurch mechanische Wechselbelastungen wie beispielsweise Schwingungen oder Zug- und/ oder Schubkräfte auf die Leitung besser aufgefangen werden können und eine lange Lebensdauer der Luftleitung gewährleistet, da beispielsweise eine Art Kerbwirkung im Übergangsbereich zwischen dem vergleichsweise formstabilen Material der Stützringe und dem flexiblen Leitungsmaterial vermieden werden.

Die Biegesteifigkeit des Stützringmaterials kann um den Faktor ≥ 5 oder ≥ 10, vorzugsweise ≥ 20 oder ≥ 50 der Biegesteifigkeit des Materials der flexiblen Leitungsabschnitte sein, jeweils unter gleichen Prüfbedingungen, unter Heranziehung der derzeit aktuellen DIN Norm zur Bestimmung der Biegesteifigkeit.

Besonders bevorzugt wird die erfindungsgemäße Luftleitung im 2-Komponenten- oder Mehrkomponenten-Spritzgussverfahren hergestellt, so dass sowohl die Stützringe als auch das Material des flexiblen Leitungsabschnittes als verschiedene Komponenten in besagtem Spritzgussverfahren hergestellt werden können, vorzugsweise in demselben Spritzgusswerkzeug. Zum einen sind hierdurch die Herstellungskosten gering. Zum anderen können aber die Stützringe und die flexiblen Leitungsabschnitte mit besonders hoher Maßgenauigkeit wie beispielsweise definierten Wandstärken sowie gegebenenfalls anderweitigen Profilierungen hergestellt werden. Insbesondere kann hierdurch eine besonders exakte Formanpassung des Kontaktbereichs der Stützringe an dem Material des flexiblen Leitungsabschnittes erfolgen. Die mechanischen Eigenschaften der Luftleitung sind hierdurch besonders gut definiert und einstellbar, insbesondere auch unter Berücksichtigung hoher thermischer Erfordernisse zur Verbindung von Heißluft und Kaltluftbauteil, besonderer mechanischer Wechselbeanspruchungen, beispielsweise zum Schwingungsausgleich zwischen den beiden mit der Leitung verbundenen Bauteilen. Der Stützring und das Material des flexiblen Leitungsabschnittes können somit passgenau und spaltfrei zueinander angeordnet sein. Ferner kann das flexible Material den Stützring mit einer gewissen zum Leitungsinneren hingerichteten Schrumpfspannung einschließen, beispielsweise aufgrund unterschiedlicher thermischer Ausdehnungskoeffizienten der verschiedenen Materialien von flexiblem Leitungsabschnitt und Stützring, wodurch der Stützring in besonderer Weise an der Leitung lagestabilisiert wird. Das Stützringmaterial kann vorzugsweise mit einer gewissen Adhäsivkraft, auch im Sinne einer Klebewirkung, mit dem Material des flexiblen Leitungsabschnittes verbunden sein oder besonders bevorzugt auch durch chemische Reaktion des Stützringmaterials mit dem Material des flexiblen Leitungsabschnittes bei der Durchführung des Spritzgussverfahrens. Hierdurch ist eine besonders hohe Haftkraft zwischen den Materialien des Stützringes und des flexiblen Leitungsabschnittes gegeben und die Leitung daher besonders hohen mechanischen und/oder thermischen Belastungen aussetzbar. Gegebenenfalls kann jedoch das Stützringmaterial auch nur eine geringe oder praktisch keine Haftung mit dem flexiblen Leitungsmaterial aufweisen, wenn diese im 2-Komponenten-Spritzgussverfahren hergestellt sind.

Die Herstellung der Leitung im Spritzgussverfahren hat sich insbesondere bei Leitungen mit Krümmung in deren Längserstreckung wie bspw. als Luftansaugkrümmer bewährt, da die Leitung im Krümmungsbereich und den sich hieran anschließenden Leitungsbereichen mit besonders exakt definierten Wandstärken herstellbar ist. Dies bezieht sich insbesondere auf die Leitungsbereiche mit flexiblem Leitungsmaterial.

Dies ist im Unterschied zu im Blasformverfahren hergestellten Luftleitungen, wo insbesondere im Krümmungsbereich im Vergleich mit den sich an diesen anschließenden Leitungsabschnitten das flexible Leitungsmaterial mit stark ungleichmäßigen und teilweise nicht reproduzierbaren Wandstärken ausgebildet ist, was zu ungünstigen Materialeigenschaften der Leitung in Bezug auf mechanische Wechselbeanspruchungen und Materialermüdungserscheinungen führt.

Vorzugsweise sind die Stützringe in Bezug auf eine Bewegung derselben in Längsrichtung der Leitung relativ zu dem Material des flexiblen Leitungsabschnittes kraft-, stoff- und/ oder formschlüssig mit dem flexiblen Leitungsmaterial verbunden. Durch diese Verbindung der Stützringe mit dem Leitungsmaterial werden die Stützringe in ihrer Solllage an der Leitung stabilisiert, insbesondere auch bei mechanischen Wechselbeanspruchungen auf die Leitung wie Schwingungen in Längs- und/oder Querrichtung der Leitung. Eine formschlüssige Verbindung zwischen Stützring und flexiblem Leitungsabschnitt kann dadurch gegeben sein, dass das Material des flexiblen Leitungsabschnittes den Stützring ein oder vorzugsweise beidseitig in Bezug auf seine beiden Stützringstirnflächen in der Höhe übergreift oder auch untergreift, wobei das flexible Leitungsmaterial stirnseitig an dem Stützring anliegen kann. Eine stoffschlüssige Verbindung kann dadurch erzielt werden, dass Stützring und flexibler Leitungsabschnitt eine gewisse Haftkraft zueinander aufweisen, beispielsweise in Form einer Adhäsiv- oder Klebekraft. Eine kraftschlüssige Verbindung kann beispielsweise dadurch gegeben sein, dass das flexible Leitungsmaterial bei der Herstellung der Leitung eine deutlich größere Schrumpfung erfährt als die Stützringe, beispielsweise aufgrund einer Abkühlung der Materialien nach der Herstellung im Spritzgusswerkzeug oder das durch geeignete Nachtemperung der hergestellten Leitung diese einer Schrumpfung unterliegt.

Nach einer Variante ist der flexible Leitungsabschnitt bevorzugt innenwandig glattwandig ausgebildet, die Innenwandung weist also keine Erhebungen, Rippen oder Senken auf. Vorzugsweise gilt dies auch im Bereich der Stützringe und/oder dem Übergangsbereich zwischen flexiblem Leitungsabschnitt und Stützring. Hierdurch weist die Leitung einen geringeren Strömungswiderstand auf, bspw. bei Verwendung als Luftansaugleitung für einen Turbolader oder eine andere Einrichtung. Ferner kann aufgrund der glattwandigen Ausbildung die Wandstärke des flexiblen Leitungsmaterials, insbesondere in den Bereichen zwischen den Stützringen, besonders geringe Toleranzen aufweisen, insbesondere bei Herstellung im Spritzgussverfahren. Die mechanischen Eigenschaften der Leitung sowie auch Materialbeanspruchungen derselben, welche unter Umständen zu einer Materialermüdung führen können, können hierbei besonders genau kontrolliert werden. Dies gilt im Unterschied zu Luftleitungen mit faltenbalgartigen Abschnitten mit Erhebungen und Senken, bei welchen die Wandstärken in der Regel ungleichmäßig sind, insbesondere bei Herstellung dieses Bauteils im Blasformverfahren. An der erfindungsgemäß ausgewählten Leitung kann die Stützringinnenseite zumindest im Wesentlichen bündig mit der Innenwandung des flexiblen Leitungsabschnittes abschließen, um einen innenwandig glattwandigen Leitungsabschnitt auszubilden.

Erfindungsgemäß weist die Leitung eine Krümmung in deren Längsrichtung auf, so dass diese beispielsweise als Luftansaugkrümmer, insbesondere für Turbolader oder andere Einrichtungen von Verbrennungskraftmaschinen, einsetzbar ist. Der mit den Stützringen versehene flexible Leitungsabschnitt befindet sich im Bereich der Krümmung der Leitung Hierdurch können auch die gekrümmten Leitungsabschnitte, welche besonders hohen mechanischen Wechselbeanspruchungen unterliegen, besonders stabilisiert werden, insbesondere in Bezug auf eine Kollaps-Steifigkeit der Leitung, wobei dennoch die Wandung des flexiblen Leitungsabschnittes eine hohe Flexibilität aufweisen kann, wodurch auch Materialermüdungen vermindert werden können.

Die Stützringe sind derart ausgebildet, dass diese im Bereich der Innenkrümmung der Leitung eine geringere Breite aufweisen als im Bereich der Außenkrümmung der Leitung. Die Stützringe sind also im Krümmungsbereich der Leitung angeordnet. Die "Breite" der Stützringe sei hierbei als deren Erstreckung in Leitungslängsrichtung verstanden. Die Stützringe können hierdurch also in Ansicht senkrecht zur Leitung keilförmig bzw. kreissegmentförmig ausgebildet sein. Die Stirnflächen der Stützringe, welche senkrecht zur Leitungslängsrichtung angeordnet sind, können eben ausgebildet sein. Die größere Erstreckungslänge der Leitung an deren Außenkrümmung gegenüber der Innenkrümmung kann somit durch eine größere Breite der Stützringe im Bereich der Außenkrümmung zumindest teilweise ausgeglichen werden. Die zwischen den Stützringen angeordneten Bereiche des flexiblen Leitungsmaterials können hierdurch vom Außenradius zum Innenradius der Leitungskrümmung hin zumindest eher eine gleichbleibende Breite aufweisen, so dass die beiden Stirnseiten eines gegebenen flexiblen Leitungsabschnittes, welcher zwischen zwei Stützringen angeordnet ist, einen geringeren Winkel einschließt als die beiden Stirnseiten eines daneben angeordneten Stützringes. Die Leitungskrümmung wird somit im Wesentlichen durch die Formgestalt der Stützringe ausgebildet. Es hat sich herausgestellt, dass hierdurch bei mechanischen Wechselbelastungen der Leitung, insbesondere bei Schwingungen quer zur Leitungsrichtung oder bei seitlicher Kraftbeaufschlagung der Leitung, diese eine wesentlich höhere Lebensdauer aufweist. Aufgrund der vorzugsweise nicht wesentlich verringerten Breite der flexiblen Leitungsbereiche im Bereich der Innenkrümmung können Materialbeanspruchungen wie Dehnungen oder Stauchungen über eine größere Erstreckung des flexiblen Leitungsmaterials verteilt werden und damit geringere Materialbeanspruchungen vorliegen, insbesondere bei kleinen Krümmungsradien der Leitung. Die "Breite" der Stützringe kann sich an der Außenkrümmung zu der Innenkrümmung der Leitung um den Faktor ≥ 3 oder ≥ 4 oder auch ≥ 5 unterscheiden. Die "Breite" der flexiblen Leitungsabschnitte kann sich an der Außenkrümmung zu der Innenkrümmung der Leitung um den Faktor ≤ 3 oder ≤ 2,5 unterscheiden.

Weist die Leitung eine Krümmung in Leitungslängsrichtung auf, so weisen vorzugsweise die Stützringe im Bereich der Außenkrümmung der Leitung eine größere Winkelerstreckung in Krümmungsrichtung auf als die zwischen den Stützringen befindlichen Bereiche des flexiblen Leitungsmaterials, insbesondere bezogen auf den Bereich der Außenkrümmung der Leitung. Die Leitungskrümmung wird somit also in größerem Ausmaß oder zumindest im Wesentlichen durch die größere Winkelerstreckung der Stützringe bewirkt.

Bevorzugt weisen die Stützringe im Bereich der Innenkrümmung der Leitung eine geringere Winkelerstreckung in Krümmungsrichtung auf, als die zwischen den Stützringen befindlichen Bereiche des flexiblen Leitungsmaterials, wobei sich die genannten Bereiche des flexiblen Leitungsmaterials zwischen den Stützringen ebenfalls auf den Bereich der Innenkrümmung der Leitung beziehen.

Die Bereiche der "Innenkrümmung" und "Außenkrümmung" der Leitung können sich jeweils auf die Krümmung der Leitung am freien Leitungsquerschnitt beziehen. Es versteht sich allgemein, dass sich eine "Krümmung der Leitung" auf einen Zustand der Leitung bezieht, in welchem diese keinen äußeren Kräften, insbesondere keinen Deformationskräften, ausgesetzt ist.

Die Materialstärke der Stützringe senkrecht zur Leitungsrichtung kann in etwa der Dicke des flexiblen Leitungsmaterials zwischen den Stützringen betragen, aber auch im Faktor ≥ 2 oder ≥ 3 oder ≥ 5 der Dicke des flexiblen Leitungsmaterials betragen.

Die radial außenliegende Umfangsfläche des Stützringes kann glattwandig, also frei von Vorsprüngen sein, oder insbesondere auch profiliert sein. Beispielsweise kann die radiale Außenfläche der Stützringe Rillen oder Rippen aufweisen, welche sich in Umfangsrichtung des Stützringes erstrecken, vorzugsweise jeweils vollumfänglich. Hierdurch kann beispielsweise der Stützring zusätzlich mechanisch stabilisiert und auch die Festigkeit der Verbindung zwischen Stützring und flexiblem Leitungsmaterial erhöht werden, insbesondere bei Kräften in Leitungslängsrichtung. Das Profil des flexiblen Leitungsmaterials kann eine "Negativform" der Stützringprofilierung sein, wozu Stützring und flexibles Leitungsmaterial im Spritzgussverfahren aneinander angespritzt sein können.

Nach einer Ausführungsform sind die radialen Innenseiten der Stützringe glattwandig also vorsprungsfrei bzw. unprofiliert ausgebildet, wodurch sich ein geringer Strömungswiderstand für angesaugte Luft o.dgl. ergibt. Alternativ kann die Stützringinnenseite auch mit einer Profilierung wie einer umlaufenden Rippe versehen sein, beispielsweise um den Stützring zu stabilisieren.

Nach einer weiteren bevorzugten Ausführungsform weist der flexible Leitungsabschnitt Wellenberge und Wellentäler auf, welche in Leitungslängsrichtung aufeinanderfolgen und innenseitig und außenseitig an der Leitungswand angeordnet sein können. Die Leitung ist hierdurch in Art eines Faltenbalgs ausgebildet. Die Stützringe werden hierbei vorzugsweise von den Wellenbergen zumindest teilweise aufgenommen.

Die Leitung hat durch die faltenbalgartige Ausführung mit Wellenbergen und Wellentälern eine hohe Flexibilität, zudem wird durch die Anordnung der Stützringe in den Wellenbergen deren Lage relativ zur Leitungswand stabilisiert, insbesondere gegenüber Verschiebungen und/oder Verkippungen in Leitungslängsrichtung. Dies ist insbesondere bei Lageveränderungen der Leitung im Betrieb der Einrichtung wie eines Kraftfahrzeuges von Vorteil, beispielsweise wenn die Leitung Schwingungen oder Vibrationen ausgesetzt ist.

Vorzugsweise werden die Stützringe von den sich zwischen den Wellenbergen und Wellentälern erstreckenden Flanken des jeweiligen Leitungsabschnittes seitlich zumindest teilweise umschlossen. Die genannten Flanken liegen hierbei vorzugsweise stirnseitig an dem Stützring an. Vorzugsweise werden die gesamten Stirnseiten der Stützring seitlich von den Flanken des flexiblen Leitungsabschnittes, welche sich zwischen Wellenberg und Wellental erstrecken, abgestützt. Der Stützring liegt somit mit seinen Stirnseiten flächig bzw. vollflächig an den Wellenberg und Wellental verbindenden Flanken des flexiblen Leitungsabschnittes an. Gegebenenfalls kann der Stützring auch an seiner radialen Innenseite von dem flexiblen Leitungsmaterial umschlossen sein, wobei diese Umschließung über den Umfang des Stützringes vollumfänglich oder teilumfänglich, beispielsweise mit mehreren in Umfangsrichtung voneinander beabstandeten Segmenten, erfolgen kann. Hierdurch kann die Lage des Stützringes in der Leitung besonders stabilisiert werden, insbesondere auch bei hohen äußeren Kräften auf die Leitung.

Vorzugsweise weist die Wellenberg und Wellental verbindende Flanke des flexiblen Leitungsabschnittes, welche zumindest bereichsweise seitlich an einem Stützring anliegt, einen nicht-geradlinigen Übergangsbereich in radialer Erstreckungsrichtung auf. Dieser Übergangsbereich kann insbesondere vollumfänglich in Bezug auf den Leitungsumfang ausgebildet sein. Dieser nicht-geradlinige Übergangsbereich kann in einem Abschnitt der Flanke des flexiblen Leitungsmaterials angeordnet sein, welche seitlich an dem Stützring anliegt. Dieser Übergangsbereich kann beispielsweise in Art einer Sicke, Absatz, Biegung oder Krümmung der Flanke in Bezug auf den einen Längsschnitt der Leitung ausgebildet sein. Der Längsschnitt der Leitung ist hierbei eine Ebene, in welcher auch die Leitungslängsachse des jeweiligen Leitungsabschnittes liegt. Durch diesen nicht-geradlinigen Übergangsbereich wird eine zusätzliche Möglichkeit einer flexiblen Bewegung der Leitung, beispielsweise bei Schwingungen derselben quer zur Leitungslängsrichtung, geschaffen, da der Übergangsbereich in Art einer Gelenkverbindung oder eines Scharniers wirkt. Andererseits kann sich bei derartigen lokalen Bewegungen eines Leitungsabschnittes der nicht-geradlinige Übergangsbereich der Wellenflanke an dem Stützring abstützen. Insbesondere auch aufgrund der wesentlich höheren Steifigkeit des Stützringes gegenüber dem flexiblen Leitungsmaterial wirkt hierdurch der Schutzring somit in Art eines Widerlagers und kann bei Kräften auf die Leitung wie bei Biege- oder Schubbeanspruchen vom flexiblen Leitungsmaterial ausgeübte Kräfte mechanisch auffangen. Materialermüdungen des Leitungsmaterials werden hierdurch wesentlich vermindert.

Bevorzugt erstrecken sich über den Wellentälern des flexiblen Leitungsabschnittes zum Leitungsinneren hin über die Stützringe hinaus, die Leitung weist somit im Bereich der Wellentäler einen geringeren Durchmesser auf als im Bereich der Stützringe. Hierdurch können die Stützringe durch die sich zwischen den Wellentälern und Wellenbergen erstreckenden Flanken des flexiblen Leitungsmaterials besonders lagefixiert werden. Bei Ausbildung eines nicht-geradlinigen Übergangsabschnittes kann hierdurch zudem der faltenbalgartige Abschnitt der Leitung eine hohe Flexibilität aufweisen. Vorzugsweise sind die Stirnseiten des Stützringes in Art eines abgestumpften Kegels ausgebildet bzw. die Stirnseiten des Stützringes im Querschnitt schräg zur Hauptebene des Stützringes angestellt, wobei sich das flexible Leitungsmaterial an diesem Bereich des Stützringes abstützt bzw. seitlich anliegt. Alternativ können die Stützringstirnseiten ballig auswärts gekrümmt sein. Hierdurch ist bei elastischen Deformationen der Leitung, beispielsweise bei Biegebeanspruchungen, eine günstige Geometrie in Bezug auf Deformationen des Leitungsmaterials gegeben.

Vorzugsweise ist die Leitung an ihren Verbindungsmitteln mit einem Heißluftbauteil und/oder einem Kaltluftbauteil eines Kraftfahrzeuges verbunden. Die Verbindungsmittel der Leitung können einstückig an der Leitung angeformt sein, beispielsweise im Spritzgussverfahren. Das Verbindungsmittel kann hierbei in Art eines Flansches, einer Muffe oder dergleichen ausgebildet sein. Vorzugsweise ist zumindest eines der beiden Bauteile von Heißluftbauteil und/oder Kaltluftbauteil des Kraftfahrzeuges mit der Leitung verbunden, insbesondere einstückig verbunden bzw. angeformt, beispielsweise im Spritzgussverfahren. Dies kann insbesondere das Kaltluftbauteil wie beispielsweise einen Teil eines Filtergehäuses betreffen. Hierdurch ist die Herstellung der Leitungen unter Berücksichtigung der angrenzenden Baugruppen und/oder die Montage der Leitung wesentlich vereinfacht.

Allgemein kann die Leitung an ihren Verbindungsmitteln mit einem Heißluftbauteil und/oder Kaltluftbauteil eines Kraftfahrzeuges auch lösbar verbunden sein. Das Heißluftbauteil kann beispielsweise ein Reinlufteinlass eines Turboladers sein. Das Kaltluftbauteil kann beispielsweise ein Teil eines Filtergehäuses sein, welches vom Turbolader angesaugte Außenluft filtert.

Vorzugsweise ist das Verbindungsmittel der Leitung an dem Anschlussbereich von Heißluftbauteil und/oder Kaltluftbauteil derart angeformt, dass dieses in Längsrichtung der Leitung formschlüssig gehaltert ist. Der Anschlussbereich des Bauteils kann somit beispielsweise einen umlaufenden Steg oder eine Rippe aufweisen, welche an beiden Stirnseiten in Bezug auf die Leitungslängsrichtung von einem Abschnitt der Leitung umgeben ist, so dass die Leitung sowohl in Bezug auf Zug- als auch Schubkräfte formschlüssig an dem Verbindungsbereich festgelegt ist. Ferner kann der Verbindungsbereich des angrenzenden Bauteils einen Anschlag aufweisen, an welchen das freie Stirnende der Leitung stirnseitig anliegt. Der jeweilige Vorsprung oder Anschlag kann sich um einen Teilumfang de Leitung erstecken, vorzugsweise sind mehrere um den Leitungsumfang verteilt angeordnete Vorsprünge und/ oder Anschläge vorgesehen. Hierdurch werden Schubkräfte des Bauteilanschlusses unmittelbar auf die Stirnseite des Leitungsendes übertragen, was besonders vorteilhaft ist. Ferner wird hierdurch das freie Stirnende der Leitung mechanisch geschützt. Alternativ oder in Kombination kann der Verbindungsbereich des angrenzenden Bauteils einen Teilbereich wie einen Steg umfassen, welcher vollumfänglich von dem Material des Verbindungsmittels der Leitung umgeben, bspw. umspritzt, ist. Der Teilbereich oder Steg hat vorzugsweise eine Erstreckungskomponente quer oder senkrecht zu Leitungslängsrichtung, wodurch eine besonders belastbare Verbindung der Bauteile gegeben ist. Das Material des Verbindungsmittels der Leitung kann - wie allgemein im Rahmen der Erfindung - aus dem flexiblen Leitungsmaterial bestehen.

Nach einer besonders bevorzugten Ausführungsform besteht das flexible Leitungsmaterial aus einem thermoplastischen Vulkanisat (TPV), welches als Elastomer ausgebildet ist. Thermoplastische Vulkanisate (TPV) bestehen in der Regel aus einer Matrixphase eines thermoplastischen Materials wie einem Polyolefin, beispielsweise Polypropylen, und einer flexiblen vernetzten Phase wie insbesondere einer Kautschukphase, beispielsweise auf Basis von EPDM oder anderen vorzugsweise synthetischen Kautschuken. Die flexible vernetzte Phase ist in der Polymermatrixphase in Form von Elastomerpartikeln fein verteilt. Das Material der Matrixphase ist in der Regel nicht vernetzt. Ein derartiges Material hat sich für den Ausgleich der Relativbewegungen der beiden an der Leitung angeschlossenen Bauteile als besonders geeignet herausgestellt, insbesondere auch bei den mechanischen und thermischen Belastungen, welchen eine an einem Turbolader angeschlossene Luftleitung oder Luftansaugkrümmer ausgesetzt ist. Insbesondere hat sich ein solches Material auch als besonders herausgestellt, um einen Stützring aus einem vergleichsweise formstabilen Material zu umschließen. Ein derartiges thermoplastisches Elastomer (TPV) kann auch faltenbalgartige Ausbildung, also mit glatter Leitungsinnenwand, mechanische Wechselbeanspruchungen gut aufnehmen und Heißluftbadbauteil und Kaltluftbauteil gut voneinander mechanisch entkoppeln. Ferner hat ein derartiges Material eine ausreichend hohe Reißdehnung, um dem im Leitungsinneren herrschenden Unterdruck zumindest im wesentlichen Stand zu halten. Das TPV-Material hat für viele Anwendungsfälle eine ausreichende Kollaps-Steifigkeit, so dass die beabstandeten Stützringe einen ausreichenden lateralen Abstand aufweisen können, um eine hohe Flexibilität de Leitung insgesamt zu ergeben.

Nach einer anderen besonders bevorzugten Variante besteht das flexible Leitungsmaterial aus TPC, d.h. einem thermoplastischen Copolymer. Es hat sich herausgestellt, dass ein solches Material die mechanischen und thermischen Erfordernisse besonders gut erfüllt, insbesondere eine besonders gute Unter-/Überdruckstabilität (Kollaps-Stabilität) aufweist und eine ausreichende Weichheit sowie Reißfestigkeit, um einen Bewegungsausgleich bei Schwingungen und dergleichen zu erfüllen. Dies gilt insbesondere bei Anwendung bei einer Leitung wie Luftleitung zum Anschluss an einen Turbolader oder einem anderen Heißbauteil.

Ein solches Material ist insbesondere bevorzugt, wenn die Leitung faltenbalgartig mit Wellenbergen und Wellentälern ausgebildet ist. Auch bei Anwendungen mit hohem Unter- oder Überdruck in der Leitung wie als Reinluftleitung oder Ladeluftleitung eines Turboladers hat sich die erfindungsgemäße Leitung besonders bewährt, insbesondere in Verbindung mit Bauteilen, welche zumindest im Wesentlichen (bspw. zu mehr als 50 Gew.-%) oder vollständig aus Polyalkylenterephtalat (PAT) oder weiter bevorzugt (Polybutylenterephthalat)PBT bestehen.

Besonders bevorzugt besteht die Leitung zumindest teilweise oder vollständig aus einem thermoplastischen Copolymer (TPC), besonders bevorzugt zu einem Anteil von ≥ 50 Gew.% , ≥ 75 Gew.%, ≥ 85 Gew.% oder zumindest praktisch vollständig. Dies bezieht sich auf den Gehalt an organischen Kunststoffen der Leitung, also unabhängig von Füllstoffen, Faserverstärkungen wie Glasfasern oder dergleichen. Es hat sich herausgestellt, dass eine Luftleitung aus einem TPC-Polymer die mechanischen und thermischen Erfordernisse ausgezeichnet erfüllt, insbesondere auch wenn die Leitung zur Verbindung mit einem Heißbauteil wie einem Turbolader eingesetzt wird. Das TPC-Polymer kann insbesondere ein thermoplastisches Polyester-Elastomer sein, welches für den Anwendungsfall sehr gute mechanische und thermische Eigenschaften vereint. Der Polyerster bildet hierbei bevorzugt die Hartphase. Für einzelne Anwendungsfälle, jedoch allgemein weniger bevorzugt, kann das Elastomer beispielsweise auch ein Styrol-Block-Copolymer (TPS) ein thermoplastisches Polyurethan oder thermoplastisches Polyether-Polyamid sein. Ein TPC-Material ist auch daher besonders bevorzugt einsetzbar, da dieses verglichen mit einem vulkanisierten thermoplastischen Material eine höhere Festigkeit und damit höhere Überdruck- und/oder unter Druckfestigkeit aufweist.

Bei einem thermoplastischen Elastomer liegt in der Regel ein mehrphasiger Kunststoff mit gummielastisch verformbaren Molekülbereichen vor, in welche Bereiche schmelzbarer, insbesondere amorpher Thermoplaste eingebaut sind. Als Copolymer sind hierbei allgemein Zwei- oder mehr Phasen Kunststoffe verstanden oder gegebenenfalls auch Polymerblends. Das thermoplastische Elastomer besteht somit in der Regel aus einer elastischen Weichphase und einer thermoplastischen Art Hartphase. Die Hartphase stellt hierbei in der Regel eine Matrix dar, so dass das Polymermaterial somit zumindest teilweise oder vollständig aufschmelzbar und im Spritzgussverfahren verarbeitbar ist. Die Hartsegmente können hierbei amorph oder teilkristallin sein, beispielsweise auch durch Ionen-Cluster thermisch reversibel vernetzte Makromoleküle mit geringer Vernetzungsdichte aufweisen. Gegebenenfalls können auch Blends aus Thermoplasten mit gewissen oder hohen Anteilen vernetzter bzw. unvernetzter Elastomerphase eingesetzt werden. Die Elastomerphase kann vernetzt unter Ausbildung eines vulkanisierten Thermoplasten ausgebildet sein, besonders bevorzugt werden aufgrund der erhöhten Festigkeit und/oder Biegesteifigkeit des Materials nicht vulkanisierte thermoplastische Elastomere eingesetzt, so dass die Leitung einem erhöhten Unter- oder Überdruck ohne Verformung oder Kollabieren ausgebildet sein kann.

Die Shore-Härte des elastomeren Leitungsmaterials liegt vorzugsweise im Bereich von 30 Shore A bis 80 Shore A, gegebenenfalls auch höher, besonders bevorzugt im Bereich von 35 bis 50 Shore A. Für bestimmte Anwendungsfälle wie bei Reinluftleitungen ist eine Härte von 30-50 Shore A besonders bevorzugt, für andere Anwendungsfälle, insbesondere bei höherem Innendruck wie bei Ladeluftleitungen, eine Härte von 40-80 Shore A. Das E-Zug Modul des elastomeren ÖLeitungsmaterials liegt vorzugsweise im Bereich von 20 bis 100 MPa. Die Angaben beziehen sich jeweils auf die einschlägigen DIN-Normen mit Gültigkeit vom 1. Januar 2018.

Das flexible Leitungsmaterial weist vorzugsweise eine Dauertemperaturbeständigkeit von größer gleich 100°C, vorzugsweise ≥ 120°C, vorzugsweise ≥ 130°C auf.

Als besonders bevorzugt hat es sich erwiesen, wenn die Stützringe aus einem Kunststoffmaterial, insbesondere Hartkunststoff bestehen. In Bezug auf die Materialbeanspruchungen hat sich Polyamid als besonders vorteilhaft herausgestellt. Dies gilt insbesondere auch in Bezug auf die Adhäsion bzw. stoffschlüssige Verbindung des Stützringmaterials mit dem flexiblen Leitungsmaterial, welches insbesondere TPV oder TPC sein kann.

Besonders bevorzugt besteht der Anschlussbereich eines der Bauteile, welches mit einem Leitungende einstückig verbunden ist, aus einem die Polyalkylenterephtalat(PAT)-Material oder weiter bevorzugt Polybutylenterephthalat(PBT)-Material. Das Anschlussteil kann hierbei zu ≥ 50 Gew.% oder ≥ 75 Gew.%, besonders bevorzugt ≥ 85 Gew.% oder zumindest praktisch vollständig aus PAT oder PBT bestehen. Dies gilt insbesondere, wenn das Material des flexiblen Leitungsabschnittes TPV oder insbesondere TPC ist. Dass PAT oder PBT- Material kann durch Füllstoffe und besondere Fasern wie Glas- und/oder Kunststofffasern, verstärkt sein oder aber auch unverstärkt eingesetzt werden. Bei der Herstellung der Leitung mit dem Anschlussteil des zu verbindenden Bauteils, beispielsweise einem Flansch eines Filtergehäuses, können Leitung und der Anschlussbereich des benachbarten Bauteils zusammen im Spritzgussverfahren, beispielsweise im 2- oder Mehrkomponenten-Spritzgussverfahren, hergestellt sein. Es hat sich herausgestellt, dass bei Verwendung des Anschlussteils aus PAT, insbesondere PBT, und der Leitung aus TPC eine besonders innige Fügeverbindung zwischen den beiden Materialien ergibt, welche den Charakter einer chemischen Verbindung hat. Die Haftung der beiden genannten Bauteile aus PAT bzw. PBT und TPC ist somit wesentlich höher als bei einer rein oberflächlichen bzw. kohäsiven Anhaftung der beiden Bauteile aneinander. Es hat sich herausgestellt, dass eine derartige Verbindung sich beim Anschluss einer Luftleitung an das angrenzende Bauteil besonders bewährt hat, angesichts der hohen thermischen und mechanischen Belastungen des Verbindungsbereichs, insbesondere unter Berücksichtigung starker Vibrationen oder Schwingungen der Luftleitung beim Betrieb eines Kraftfahrzeuges. Insbesondere bei hohen Unter- oder Überdrucken in der Leitung wie bspw. auch als Reinluftleitung bzw. Ansaugleitung oder Ladeluftleitung eines Turboladers hat sich diese Ausführung besonders bewährt. Gegebenenfalls kann das Anschlussteil jedoch auch aus Polycarbonat oder Polycarbonat/ABS bestehen oder diese Komponenten zu einem gewissen Anteil, beispielsweise ≥ 5 Gew% oder ≥ 10 Gew%, gegebenenfalls auch ≥ 25 Gew% enthalten, vorzugsweise nicht ≥ 25 Gew% oder nicht ≥ 10 Gew%.

Besonders bevorzugt besteht die Leitung aus TPC, gegebenenfalls auch aus TPV, wobei die Leitung mit einem Anschlussteil einer Kraftfahrzeugeinrichtung, welches zumindest teilweise oder vollständig aus PAT oder insbesondere PBT besteht, verschweißt ist. Die Einrichtung kann insbesondere eine im Rahmen der Erfindung offenbarte Kraftfahrzeugeinrichtung sein. Der Schweißvorgang ist besonders bevorzugt als Heiß-Gas-Verschweißung durchgeführt. Eine derartige Verbindung von Leitung und Anschlussteil insbesondere bei hohen mechanischen und thermischen Beanspruchungen der Leitung, auch Wechselbeanspruchungen, besonders bewährt, denen auch der Verbindungsbereich von Leitung und Anschlussteil ausgesetzt ist. Die Anwendung des Heiß-Gas-Schweißverfahrens ist besonders bevorzugt, da hier eine Verbindung hoher Belastbarkeit und hoher Maßgenauigkeit erzielbar ist, insbesondere in Bezug auf den Anwendungsbereich der vorliegenden Erfindung, wobei der Wärmeeintrag auf den Verbindungsbereich exakt beschränkbar ist. Der Schweißvorgang kann direkt im Spritzgusswerkzeug erfolgen, wodurch die Leitungsverbindung verfahrenstechnisch einfach aber zugleich mit hoher Genauigkeit durchführbar ist und der Verbindungsbereich eine hohe Lebensdauer aufweist.

Die Erfindung wird beispielhaft anhand von Ausführungsbeispielen erläutert. Sämtliche Merkmale der Ausführungsbeispiele gelten auch einzeln oder in Kombination miteinander als allgemein im Rahmen der Erfindung und unabhängig von dem jeweiligen Ausführungsbeispiel offenbart. Es zeigen:
- Fig. 1:: eine Draufsicht auf eine Bauteilanordnung einer nicht 2 erfindungsgemäßen Luftleitung mit Anschlussteilen eines Heißluftbauteils und eines Kaltluftbauteils, N
- Fig. 2:: einen Längsschnitt einer erfindungsgemäßen Leitung einer ersten Ausführungsform,
- Fig. 3:: einen Längsschnitt einer nicht erfindungsgemäßen Leitung.

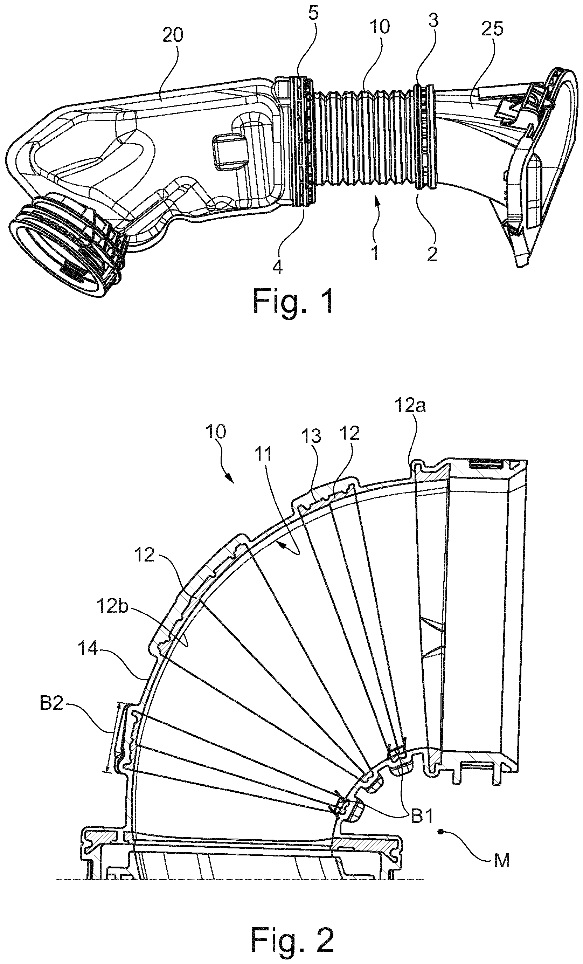

Fig. 1 zeigt eine nicht erfindungsgemäße Luftleitung 1 für Kraftfahrzeuge, insbesondere zur Verbindung eines Heißbauteils 20 mit einem Kaltbauteil 25, wobei an einem ersten Ende 2 der Leitung erste Verbindungsmittel 3 zur luftdichten Festlegung der Luftleitung 1 an dem Heißbauteil 20 und an dem zweiten Ende 4 der Leitung zweite Verbindungsmittel 5 zur luftdichten Festlegung der Leitung an dem Kaltbauteil 25 vorgesehen sind. Zumindest ein flexibler Leitungsabschnitt 10 ist zwischen dem ersten und dem zweiten Verbindungsmittel 3, 5 vorgesehen ist. Die Leitung weist einen freien Leitungsquerschnitt auf. Das Heißbauteil 20 kann mit dem Verbindungsmittel 3 der Leitung verschweißt sein. Das Kaltbauteil 25 kann einstückig mit den zweiten Verbindungsmitteln 5 der Leitung 1 verbunden, bspw. angespritzt, sein. Die ersten und die zweiten Verbindungsmittel 3, 5 der Leitung können als starres Bauteil wie beispielsweise Muffe oder Stutzen ausgebildet sein. Entsprechendes kann für die Anschlussteile der mit der Leitung verbundenen Bauteile wie Heiß- und/oder Kaltbauteil gelten, ohne hierauf beschränkt zu sein. Die Verbindungsmittel 3 oder 5 der Leitung und/oder das Anschlussteil des anderen, vorzugsweiese starren Bauteils bestehen hier aus PBT (Polybutylenterephthalat. Das Heißbauteil 20 ist hier das Anschlussteil eines Turboladers, das Kaltbauteil 25 ein Filtergehäuse zum Filtern der Ansauglauft des Turboladers, wobei die Leitung aber nicht auf diesen Anwendungsbereich beschränkt und bspw. als Ladeluftleitung oder Rohleitung einsetzbar ist, insbesondere jeweils zur Versorgung eines Turboladers.

Die Verbindung der Leitung mit dem Anschlussteil des Turboladers oder einer anderen Kraftfahrzeugeinrichtung erfolgt insbesondere durch Verschweißen, im speziellen durch Heiß-Gas-Verschweißung. Dies gilt insbesondere, wenn die Leitung aus einem TPC-Material und das Anschlussteil zumindest teilweise oder vollständig aus PBT (Polybutylenterephthalat) besteht.

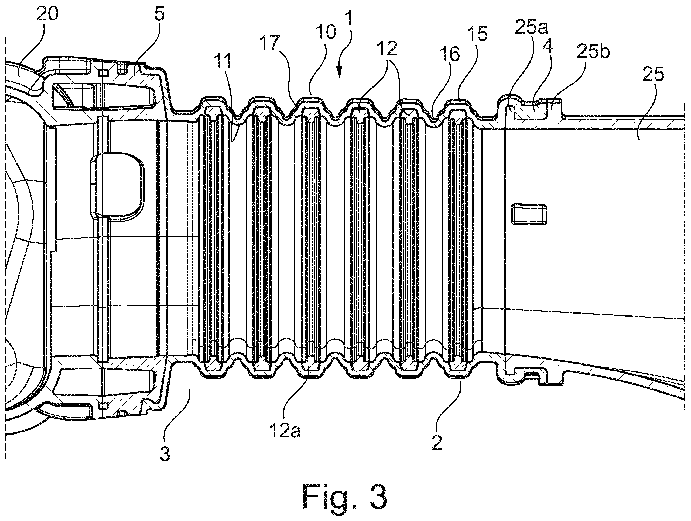

Bei den Beispielen der Figuren 2 und 3 weist der flexible Leitungsabschnitt 10 eine Wandung 11 aus einem flexiblen Leitungsmaterial auf. Die Wandung ist luftdicht in Art eines Schlauches ausgebildet. Die Wandung 11 erstreckt sich durchgehend über die Länge und den Umfang des Leitungsabschnittes. Erfindungsgemäß sind Stützringe 12 aus einem gegenüber dem flexiblen Leitungsmaterial formstabilen Material vorgesehen, welche den freien Leitungsquerschnitt umgeben und den flexiblen Leitungsabschnitt in seiner Querschnittsform stabilisieren. Die Stützringe 12 sind in Leitungslängsrichtung voneinander beabstandet, zwischen den Stützringen 12 erstrecken sich Abschnitte 13 des flexiblen Leitungsmaterials.

Sofern sich aus dem Zusammenhang nichts anderes ergibt, gelten die Ausführungen jeweils für alle Ausführungsbeispiele.

Der flexible Leitungsabschnitt, also die Wandung 11 zusammen mit den Stützringen 12, ist im 2-Komponenten-Spritzgussverfahren hergestellt. Wandung 11 und Stützringe 12 sind durch das Anspritzen und die Materialwahl adhäsiv miteinander verbunden.

Die Stützringe 12 sind in Bezug auf eine Bewegung derselben relativ zu dem Material des flexiblen Leitungsabschnittes in Längsrichtung der Leitung kraft- und/oder form- und/oder stoffschlüssig mit dem flexiblen Leitungsmaterial verbunden sind. Dies erfolgt einerseits durch die genannten Adhäsivkräfte. Andererseits werden die Stützringe an ihren Stirnseiten 12a von dem flexiblen Leitungsmaterial umgeben, unter enger Anlage derselben aneinander. Das Leitungsmaterial ersteckt sich somit, an den Stützringen anliegend, zumindest über einen Teil der Dicke derselben. Die Stützringe 12 sind hierbei in Nuten (Fig. 2) oder in Wellenbergen (Fig. 3) des flexiblen Leitungsmaterials angeordnet. Die Stützringe 12 sind radial innenseitig an der Wandung 11 des flexiblen Leitungsabschnittes angeordnet sind.

Nach dem Ausführungsbeispiel der Fig. 2 ist der flexible Leitungsabschnitt innenwandig glattwandig ausgebildet, also frei von Vorsprüngen oder Senken oder anderen Profilierungen. Dies bezieht sich sowohl auf die Innenseiten 12b des Stützrings als auch der Längsabschnitte 14 aus flexiblem Leitungsmaterial zwischen den Stützringen. Außenseitig weisen die Stützringe 12 rippenförmige Profilierungen 13 auf, welche kongruent mit negativ geformten Profilierungen des flexiblen Leitungsmaterials zusammenwirken, was durch Anspritzen von Leitungsmaterial und Stützringmaterial aneinander erfolgen kann. Die mechanische Verbindung von Leitungsmaterial und Stützringen, insbesondere in Bezug auf Kräfte in Leitungslängsrichtung wird hierdurch wesentlich verbessert.

Die Stützringe 12 sind nach Fig. 2 im Bereich einer Krümmung der Leitung angeordnet und weisen in Leitungslängsrichtung im Bereich der Innenkrümmung der Leitung eine geringere Breite B1 auf als die Breite B2 im Bereich der Außenkrümmung der Leitung. Die Stützringe 12 weisen im Bereich der Außenkrümmung der Leitung eine größere Winkelerstreckung in Krümmungsrichtung auf als die zwischen den Stützringen 12 befindlichen Bereiche 14 des flexiblen Leitungsmaterials. Die Stützringe 12 weisen im Bereich der Innenkrümmung der Leitung eine geringere Winkelerstreckung in Krümmungsrichtung auf als die zwischen den Stützringen befindlichen Bereiche 14 des flexiblen Leitungsmaterials. Die Winkelerstreckung bezieht sich jeweils auf den Krümmungsmittelpunkt M der Leitung, welcher den Krümmungsradius definiert.

Nach den Figuren 2 und 3 sind die Stützringe 12 von dem Material des flexiblen Leitungsabschnittes zumindest teilweise oder vollständig umgeben sind. Hierzu sind die die Stützringe 12 in Nuten des flexiblen Leitungsmaterials angeordnet (Fig. 2) oder in Wellenbergen (Fig. 3), wobei das flexible Leitungsmaterial jeweils stirnseitig an den Stützringen 12 end anliegt, vorzugsweise adhäsiv mit diesem verbunden ist.

Nach dem Beispiel der Fig. 3 ist der flexible Leitungsabschnitt 10 faltenbalgartig mit Wellenbergen 16 und Wellentälern 17 ausgebildet und die Stützringe 12 sind im Bereich der Wellenberge 16 angeordnet. Das flexible Leitungsmaterial umschließt auch die Stirnseiten 12a der Stützringe über zumindest einen Teil der Materialdicke derselben. Die Stützringstirnseiten 12a sind in radialer Richtung schräg angestellt bzw. kegelstumpfförmig ausgebildet. Der flexible Leitungsabschnitt weist zwischen Wellenberg 15 und Wellental 16 jeweils einen nicht-gradlinigen Übergangsbereich 17 auf, welcher sich an die Stützringstirnfläche 12a unmittelbar anschließt, was sich in Bezug auf mechanische Wechselbeanspruchungen wie im Falle von Schwingungen als besonders vorteilhaft herausgestellt hat. Zur Versteifung des Stützringes ist an dessen Innenseite 12c eine umlaufende Rippe 18 vorgesehen.

Nach Fig. 3 ist der Verbindungsbereich des Bauteils 25, welches mit der Leitung verbunden ist, mit dem dem ersten Verbindungsmittel 3 der Leitung umspritzt. Das Bauteil 25 weist hierbei zumindest einen radialen Vorsprung 25a auf, welcher in Leitungslängsrichtung gesehen von dem flexiblen Leitungsmaterial hinterspritzt ist. Der Vorsprung 25a kann umlaufend sein oder können mehrere in Umfangsrichtung verteilt angeordnete Vorsprünge vorgesehen sein. Ferner ist am dem Bauteil 25 ein Anschlag 25b, hier in Form eines umlaufenden Flansches, vorgesehen, gegen welchen die Stirnseite des Leitungsendes anliegt und so geschützt ist.

Das Material des flexiblen Leitungsabschnittes 10 nach dem Ausführungsbeispiel der Fig. 2, aber auch nach dem Beispiel der Fig. 3, ist hier ein TPV-Elastomer. Das Material des flexiblen Leitungsabschnittes 10 nach dem Beispiel der Fig. 3, aber gegebenenfalls auch der Fig. 2, ist hier ein TPC-Elastomer. Das Material des Stützringes 12 kann jeweils ein Kunststoffmaterial, insbesondere Hartkunststoff sein, im speziellen bevorzugt Polyamid.

Das flexible Leitungsmaterial kann eine Härte von ca. 40 Shore A und ein E-Zug-Modul von 50 MPa aufweisen.

### Bezugszeichenliste

- 1: Leitung
- 2: erstes Ende
- 3: Verbindungsmittel
- 4: zweites Ende
- 5: Verbindungsmittel
- 10: flexibler Leitungsabschnitt
- 11: Wandung
- 12: Stützring
- 12a: Stützringstirnseite
- 12b: Stützringinnenseite
- 13: Profilierung
- 14: Bereich des flexiblen Leitungsabschnittes
- 15: Wellenberg
- 16: Wellental
- 17: Übergangsbereich
- 18: Stützringrippe
- 20: Heißbauteil
- 25: Kaltbauteil
- 25a: Vorsprung
- 25b: Anschlag
- B1: erste Breite
- B2: zweite Breite

## Patentansprüche

1. Luftleitung (1) für Kraftfahrzeuge, insbesondere zur Verbindung eines Heißbauteils (20) mit einem Kaltbauteil (30), wobei an einem ersten Ende (2) der Leitung (1) erste Verbindungsmittel (3) zur luftdichten Festlegung der Luftleitung (1) an einem Heißbauteil (20) und an dem zweiten Ende (4) der Leitung zweite Verbindungsmittel (5) zur luftdichten Festlegung der Leitung (1) an einem Kaltbauteil (25) vorgesehen sind, wobei zumindest ein flexibler Leitungsabschnitt (10) zwischen dem ersten und dem zweiten Verbindungsmittel (3,5) vorgesehen ist, und wobei die Leitung (1) einen freien Leitungsquerschnitt aufweist, wobei Stützringe (12) aus einem gegenüber dem flexiblen Leitungsmaterial formstabilen Material vorgesehen sind, welche den freien Leitungsquerschnitt umgeben und den flexiblen Leitungsabschnitt (10) in seiner Querschnittsform stabilisieren, wobei die Leitung eine Krümmung aufweist, aus welcher sich eine Innenkrümmung der Leitung und eine Außenkrümmung der Leitung ergeben, **DADURCH GEKENNZEICHNET, DASS** die Stützringe (12) im Bereich der Innenkrümmung eine geringere Breite in Längsrichtung der Leitung aufweisen als im Bereich der Außenkrümmung der Leitung.

2. Leitung nach Anspruch 1, **dadurch gekennzeichnet, dass** die Stützringe (12) und das flexible Leitungsmaterial im 2- oder Mehrkomponenten-Spritzgussverfahren hergestellt sind.

3. Leitung nach Anspruch 1 oder 2, **dadurch gekennzeichnet, dass** die Stützringe (12) in Bezug auf eine Bewegung derselben relativ zu dem Material der flexiblen Leitungsabschnitte (10) in Längsrichtung der Leitung (1) kraft- und/oder form- und/oder stoffschlüssig mit dem flexiblen Leitungsmaterial verbunden sind.

4. Leitung nach einem der Ansprüche 1 bis 3, **dadurch gekennzeichnet, dass** die Stützringe (12) radial innenseitig an der Wandung (11) des flexiblen Leitungsabschnittes (10) angeordnet sind.

5. Leitung nach einem der Ansprüche 1 bis 4, **dadurch gekennzeichnet, dass** die Stützringe (12) im Bereich der Außenkrümmung der Leitung (1) eine größere Winkelerstreckung in Krümmungsrichtung aufweisen als die zwischen den Stützringen (12) befindlichen Bereiche des flexiblen Leitungsmaterials.

6. Leitung nach einem der Ansprüche 1 bis 5, **dadurch gekennzeichnet, dass** die Stützringe (12) im Bereich der Innenkrümmung der Leitung (1) eine geringere Winkelerstreckung in Krümmungsrichtung aufweisen, als die zwischen den Stützringen (12) befindlichen Bereiche des flexiblen Leitungsmaterials.

7. Leitung nach einem der Ansprüche 1 bis 6, **dadurch gekennzeichnet, dass** die Stützringe (12) von dem Material des flexiblen Leitungsabschnittes zumindest teilweise oder vollständig umgeben sind.

8. Leitung nach einem der Ansprüche 1 bis 7, **dadurch gekennzeichnet, dass** der flexible Leitungsabschnitt Wellenberge (15) und Wellentäler (16) aufweist und dass die Stützringe (12) im Bereich der Wellenberge (15) angeordnet sind.

9. Leitung nach Anspruch 8, **dadurch gekennzeichnet, dass** die Stützringe (12) von den sich in Richtung auf die Wellentäler (16) erstreckenden Abschnitten der Wellenberge (15) seitlich zumindest teilweise umschlossen sind.

10. Leitung nach Anspruch 8 oder 9, **dadurch gekennzeichnet, dass** der flexible Leitungsabschnitt (10) zwischen Wellenberg (15) und Wellental (16) einen nicht-gradlinigen Übergang (17) aufweist.

11. Leitung nach einem der Ansprüche 1 bis 10, **dadurch gekennzeichnet, dass** das Material des flexiblen Leitungsabschnittes (10) ein TPV-Elastomer ist.

12. Leitung nach einem der Ansprüche 1 bis 11, **dadurch gekennzeichnet, dass** das flexible Leitungsmaterial zumindest teilweise oder vollständig aus einem TPC-Elastomer besteht.

13. Leitung nach einem der Ansprüche 1 bis 12, **dadurch gekennzeichnet, dass** das Material des Stützringes (12) ein Polyamid ist.

14. Anordnung umfassend eine Leitung nach einem der Ansprüche 1 bis 13 und ein starres Bauteil wie beispielsweise einen Stutzen, **dadurch gekennzeichnet, dass** die ersten und/oder die zweiten Verbindungsmittel (3,5) der Leitung (1) an das starre Bauteil angeformt ist.

15. Leitung nach einem der Ansprüche 1 bis 13 oder Anordnung nach Anspruch 14, **dadurch gekennzeichnet, dass** die Leitung (1) dazu ausgelegt ist, an ihren Verbindungsmitteln (3,5) mit einem Heißluftbauteil (20) und/oder Kaltluftbauteil (25) eines Kraftfahrzeuges verbunden zu werden.

## Claims

1. Air duct (1) for motor vehicles, in particular for connecting a hot component (20) to a cold component (30), first connecting means (3) being provided at a first end (2) of the duct (1) for fixing the air duct (1) in an airtight manner to a hot component (20), and second connecting means (5) being provided at the second end (4) of the duct for fixing the duct (1) in an airtight manner to a cold component (25), wherein at least one flexible duct section (10) is provided between the first and the second connecting means (3, 5), and wherein the duct (1) has a free duct cross-section, wherein support rings (12) of a material which is dimensionally stable relative to the flexible duct material are provided, which surround the free duct cross-section and stabilize the flexible duct section (10) in its cross-sectional shape, wherein the duct has a curvature, from which an inner curvature of the duct and an outer curvature of the duct result, **CHARACTERIZED IN THAT** the support rings (12) have a smaller width in the longitudinal direction of the duct in the region of the inner curvature than in the region of the outer curvature of the duct.

2. Air duct according to claim 1, **characterized in that** the support rings (12) and the flexible duct material are produced by 2- or multi-component injection molding.

3. Air duct according to claim 1 or 2, **characterized in that** the support rings (12) are connected to the flexible duct material in a force-fitting and/or form-fitting and/or material-fitting manner with respect to a movement thereof relative to the material of the flexible duct sections (10) in the longitudinal direction of the duct (1).

4. Air duct according to one of claims 1 to 3, **characterized in that** the support rings (12) are arranged radially internally on the wall (11) of the flexible duct section.

5. Air duct according to one of claims 1 to 4, **characterized in that** the support rings (12) in the region of the outer curvature of the duct (1) have a greater angular extent in the direction of curvature than the regions of the flexible duct material located between the support rings (12).

6. Air duct according to one of the claims 1 to 5, **characterized in that** the support rings (12) in the region of the inner curvature of the cable (1) have a smaller angular extent in the direction of curvature than the regions of the flexible duct material located between the support rings (12).

7. Air duct according to one of claims 1 to 6, **characterized in that** the support rings (12) are at least partially or completely surrounded by the material of the flexible duct section.

8. Air duct according to one of claims 1 to 7, **characterized in that** the flexible duct section has wave crests (15) and wave troughs (16) and that the support rings (12) are arranged in the region of the wave crests (15).

9. Air duct according to claim 8, **characterized in that** the support rings (12) are laterally at least partially enclosed by the sections of the wave crests (15) extending in the direction of the wave troughs (16).

10. Air duct according to claim 8 or 9, **characterized in that** the flexible duct section (10) between the wave crest (15) and the wave trough (16) has a non-linear transition (17).

11. Air duct according to any one of claims 1 to 10, **characterized in that** the material of the flexible duct section (10) is a TPV elastomer.

12. Air duct according to any one of claims 1 to 11, **characterized in that** the flexible duct material consists at least partially or entirely of a TPC elastomer.

13. Air duct according to any one of claims 1 to 12, **characterized in that** the material of the support ring (12) is a polyamide.

14. Arrangement comprising an air duct according to any one of claims 1 to 13 and a rigid component such as a fitting, **characterized in that** the first and/or the second connecting means (3, 5) of the duct (1) are molded onto the rigid component.

15. Air duct according to one of claims 1 to 13 or arrangement according to claim 14, **characterized in that** the duct (1) is adapted to be connected at its connecting means (3, 5) to a hot air component (20) and/or cold air component (25) of a motor vehicle.

## Revendications

1. Conduite d'air (1) pour véhicules à moteur, en particulier pour relier une pièce chaude (20) à une pièce froide (30), des premiers moyens de liaison (3) étant prévus à une première extrémité (2) de la conduite (1) pour fixer de manière étanche à l'air la conduite d'air (1) à une pièce chaude (20) et des deuxièmes moyens de liaison (5) étant prévus à la deuxième extrémité (4) de la conduite pour fixer de manière étanche à l'air la conduite (1) à une pièce froide (25), au moins une section de conduite flexible (10) étant prévue entre les premier et deuxième moyens de liaison (3, 5), et la conduite (1) présentant une section transversale libre, des bagues de support (12) étant prévus en un matériau indéformable par rapport au matériau de conduite flexible, lesquels entourent la section transversale libre de la conduite et stabilisent la section de conduite flexible (10) dans sa forme de section transversale, la conduite présentant une courbure dont résultent une courbure intérieure de la conduite et une courbure extérieure de la conduite, **CARACTÉRISÉE EN CE QUE**
les bagues de support (12) présentent, dans la zone de la courbure intérieure, une largeur inférieure dans la direction longitudinale de la conduite que dans la zone de la courbure extérieure de la conduite.

2. Conduite selon la revendication 1, **caractérisée en ce que** les bagues de support (12) et le matériau de conduite flexible sont fabriqués par un procédé de moulage par injection à deux ou plusieurs composants.

3. Conduite selon la revendication 1 ou 2, **caractérisée en ce que** les bagues de support (12) sont reliées au matériau de conduite flexible par adhérence et/ou par complémentarité de forme et/ou de matière par rapport à un mouvement de celles-ci par rapport au matériau des tronçons de conduite flexible (10) dans la direction longitudinale de la conduite (1).

4. Conduite selon l'une des revendications 1 à 3, **caractérisée en ce que** les bagues de support (12) sont disposées radialement à l'intérieur de la paroi (11) de la section de conduite flexible (10).

5. Conduite selon l'une des revendications 1 à 4, **caractérisée en ce que** les bagues de support (12) présentent, dans la zone de courbure extérieure de la conduite (1), une extension angulaire dans le sens de la courbure plus importante que les zones du matériau de conduite flexible situées entre les bagues de support (12).

6. Conduite selon l'une des revendications 1 à 5, **caractérisée en ce que** les bagues de support (12) présentent, dans la zone de la courbure interne de la conduite (1), une extension angulaire dans le sens de la courbure plus faible que les zones du matériau de conduite flexible situées entre les bagues de support (12).

7. Conduite selon l'une des revendications 1 à 6, **caractérisée en ce que** les bagues de support (12) sont au moins partiellement ou totalement entourés par le matériau de la section de conduite flexible.

8. Conduite selon l'une des revendications 1 à 7, **caractérisée en ce que** la section de conduite flexible présente des crêtes (15) et des creux (16) d'onde et **en ce que** les bagues de support (12) sont disposées au niveau des crêtes (15) d'onde.

9. Conduite selon la revendication 8, **caractérisée en ce que** les bagues de support (12) sont au moins partiellement entourées latéralement par les sections des crêtes d'onde (15) s'étendant en direction des creux d'onde (16).

10. Conduite selon la revendication 8 ou 9, **caractérisée en ce que** la section de conduite flexible (10) présente une transition non rectiligne (17) entre la crête (15) et le creux (16) d'onde.

11. Conduite selon l'une des revendications 1 à 10, **caractérisée en ce que** le matériau de la section de conduite flexible (10) est un élastomère TPC.

12. Conduite selon l'une des revendications 1 à 11, **caractérisée en ce que** le matériau de la conduite flexible est au moins partiellement ou totalement constitué d'un élastomère TPC.

13. Conduite selon l'une des revendications 1 à 12, **caractérisée en ce que** le matériau de la bague de support (12) est un polyamide.

14. Ensemble comprenant une conduite selon l'une des revendications 1 à 13 et un élément rigide tel qu'une tubulure, **caractérisé en ce que** les premiers et/ou les deuxièmes moyens de liaison (3, 5) de la conduite (1) sont surmoulés sur l'élément rigide.

15. Conduite selon l'une des revendications 1 à 13 ou ensemble selon la revendication 14, **caractérisé en ce que** la conduite (1) est adaptée pour être reliée par ses moyens de liaison (3, 5) à un composant à air chaud (20) et/ou à un composant à air froid (25) d'un véhicule automobile.
